# EUROPEAN PATENT APPLICATION

(11) **EP 4 822 067 A1**
(43) Date of publication of application: **14.10.2026**
(21) Application number: 23960953.0
(22) Date of filing: 20.12.2023
(51) Int. Cl.: C25D 5/12, C25D 3/56, C25D 3/12, C25D 7/06, C25D 5/50, B21B 1/22

(54) **PLATED STEEL SHEET AND MANUFACTURING METHOD THEREOF**

(30) Priority: 05.12.2023 KR 20230174234
(71) Applicant: POSCO Co., Ltd, Gyeongsangbuk-do 37859 (KR)
(72) Inventor: JO, Du-Hwan, Pohang-si, Gyeongsangbuk-do 37877 (KR); JO, Min-ho, Pohang-si, Gyeongsangbuk-do 37877 (KR)
(74) Representative: Meissner Bolte Partnerschaft mbB
(86) International application number: PCT/KR2023/021110
(87) International publication number: WO 2025/121524

(57) **Abstract**

One aspect of the present invention provides a plated steel sheet. The plated steel sheet comprises: a base steel sheet; a Zn-Ni plating layer disposed on at least one surface of the base steel sheet; a Ni plating layer disposed on one surface of the Zn-Ni plating layer; and an Fe-Ni-Zn diffusion layer disposed between the base steel sheet and the Zn-Ni plating layer, wherein the degree of alloying in the diffusion layer may be 30% or more and less than 80%.

## Description

### Technical Field

The present disclosure relates to a plated steel sheet and a manufacturing method thereof. More specifically, the present disclosure relates to a plated steel sheet that may be used in secondary battery cases and the like and a manufacturing method thereof.

### Background Art

Recently, as part of efforts to reduce CO₂ emissions for protection of the global environment, development in and demand for the fields of electric automobiles and electronic devices have been increasing significantly. With such technological development, the use of rechargeable secondary batteries has been increasing, and applications of secondary batteries for mobile devices, power tools, energy storage apparatuses, and electric automobiles have also been diversified.

In general, demand has been increasing for materials for cases for secondary batteries to have improved corrosion resistance in order to withstand the alkaline properties of battery contents. For example, aluminum, plastic, or nickel-plated steel sheets having excellent corrosion resistance are increasingly used as materials for such cases for secondary batteries.

Among these, the nickel-plated steel sheet may be manufactured from a cold-rolled steel sheet through processes such as nickel plating, diffusion heat treatment, and temper rolling. In this case, the Ni coating weight, the degree of alloying of an Fe alloy layer formed by heat treatment, the hardness of a surface of the Ni plating layer, and the like are important factors that determine the quality of the case (for example, corrosion resistance, formability, and the like).

In addition, since the nickel-plated steel sheet is manufactured to form a case for a secondary battery through press working, there is demand for a material capable of ensuring press formability in addition to corrosion resistance. Specifically, the strength of the base steel sheet, the elongation of the base steel sheet, and/or the hardness of the Ni plating layer are among the factors that determine press formability.

For example, when the hardness of the Ni plating layer is excessively high, defects may occur due to delamination or cracks in the plating layer during a press forming process, or the die may be damaged. In addition, for example, when the strength of the base steel sheet or the hardness of the Ni plating layer is excessively low, the plating layer may adhere to the die during the press forming process, resulting in significant burr formation and reduced productivity, or quality problems may occur, such as an electrical short circuit after manufacturing of the secondary battery, or loss of battery function due to burr fragments reacting with an electrolyte inside the secondary battery.

As a conventional technology for manufacturing a case for a secondary battery, Patent Document 1 discloses a technique for improving interfacial adhesion between a base steel sheet and a plating layer through a Ni-Fe alloy layer and improving corrosion resistance by filling crack portions formed on a surface layer of nickel, which is a hard metal.

However, as a material for a case for a secondary battery using a steel sheet, there remains a need for research into a material having sufficient corrosion resistance and formability.

(Patent Document 1) U.S. Patent No. 5,587,248

### Summary of Invention

### Technical Problem

An aspect of the present disclosure is to provide a plated steel sheet having excellent corrosion resistance and formability, and a method for manufacturing the same.

An object of the present disclosure is not limited to the above description. Additional objects of the present disclosure are described throughout the present specification, and those skilled in the art to which the present disclosure pertains will have no difficulty in understanding the additional objects of the present disclosure from the description set forth in the present specification.

### Solution to Problem

According to an aspect of the present disclosure, there is provided a plated steel sheet. The plated steel sheet may include: a base steel sheet; a Zn-Ni plating layer provided on at least one surface of the base steel sheet; a Ni plating layer provided on one surface of the Zn-Ni plating layer; and an Fe-Ni-Zn diffusion layer provided between the base steel sheet and the Zn-Ni plating layer, wherein a degree of alloying of the diffusion layer may be 30% or more and less than 80%.

Further, in the plated steel sheet described above, a content of Ni based on the total weight of the Zn-Ni plating layer may be 5 to 30 wt%.

Further, in any one of the plated steel sheets described above, a thickness of the Zn-Ni plating layer may be 1 to 5 µm.

Further, in any one of the plated steel sheets described above, a thickness of the Ni plating layer may be 1 to 5 µm.

Further, in any one of the plated steel sheets described above, an average surface roughness (Ra) of the Ni plating layer may be 1.0 µm or more and less than 2.0 µm.

According to another aspect of the present disclosure, there is provided a method for manufacturing a plated steel sheet. The method may include: subjecting at least one surface of a base steel sheet to Zn-Ni plating; subjecting the Zn-Ni-plated steel sheet to Ni plating; and annealing the Ni-plated steel sheet, wherein, in the annealing, an Fe-Ni-Zn diffusion layer having a degree of alloying of 30% or more and less than 80% may be formed.

Further, in the method described above, when the base steel sheet in the preparation is an unannealed base steel sheet, the annealing may be performed at 520 to 670°C.

Further, in any one of the methods described above, when the base steel sheet in the preparation is an annealed base steel sheet, the annealing may be performed at 380 to 520°C.

Further, in any one of the methods described above, the Zn-Ni plating may be performed by Zn-Ni electroplating at a coating weight of 3 to 20 g/m².

Further, in any one of the methods described above, the Ni plating may be performed by Ni electroplating at a coating weight of 3 to 15 g/m².

Further, in any one of the methods described above, the annealing may be performed for more than 20 seconds and less than 100 seconds.

Further, in any one of the methods described above, the method may further include temper rolling the annealed steel sheet.

Further, in any one of the methods described above, the temper rolling may be performed at an elongation of 0.7 to 1.5%.

### Advantageous Effects of Invention

According to the present disclosure, the inclusion of an Fe-Ni-Zn diffusion layer may improve formability and corrosion resistance, and thus the plated steel sheet may be used as a material for a secondary battery case.

Further, according to the present disclosure, the inclusion of a Zn-Ni plating layer may improve interfacial adhesion between the base steel sheet and the plating layer and elongation, thereby further improving press formability.

Various and beneficial advantages and effects of the present disclosure are not limited to those described above and may be more readily understood in the course of describing specific embodiments in the present disclosure.

### Brief Description of Drawings

A brief description of each drawing is provided in order to facilitate a more complete understanding of the drawings referred to in the detailed description of the present disclosure.
FIG. 1 is a flowchart illustrating a method for manufacturing a plated steel sheet according to an embodiment in the present disclosure.
FIG. 2 is a graph showing GDS analysis of a plated steel sheet of Example 23.
FIG. 3 is a graph showing GDS analysis of a plated steel sheet of Comparative Example 4.

### Best Mode for Invention

Hereinafter, preferred embodiments in the present disclosure will be described. However, the embodiments in the present disclosure may be modified in various other forms, and the terms used in the present specification are used to describe the present disclosure and are not intended to limit the present disclosure. In addition, singular forms used in the present specification include plural forms, unless the context clearly indicates otherwise.

In the present specification, the term "include" is used to indicate that other components may be further included, rather than excluding other components, unless specifically stated otherwise.

In addition, unless otherwise specifically defined in the specification of the present disclosure, a unit of % means wt%.

Unless otherwise defined, all terms including technical terms and scientific terms used in the present specification have the same meanings as those commonly understood by those skilled in the art to which the present disclosure pertains. Previously defined terms are to be interpreted as having meanings consistent with the relevant technical literature and the disclosure herein.

Hereinafter, the present disclosure will be described in detail.

A plated steel sheet according to an embodiment in the present disclosure may include: a base steel sheet; a Zn-Ni plating layer provided on at least one surface of the base steel sheet; a Ni plating layer provided on one surface of the Zn-Ni plating layer; and an Fe-Ni-Zn diffusion layer provided between the base steel sheet and the Zn-Ni plating layer.

First, the base steel sheet will be described. With respect to the base steel sheet, the type of steel sheet, the alloy composition system, and the like are not particularly limited, and any steel sheet commonly used for metal plating in the art may be used. For example, the base steel sheet may be an ultra-low-carbon steel having excellent formability. In addition, for example, the base steel sheet may be an annealed cold-rolled steel sheet (cold rolled, CR) or an unannealed cold-rolled steel sheet (full hard, FH).

The base steel sheet may contain carbon (C), silicon (Si), manganese (Mn), and phosphorus (P). Hereinafter, each alloy component will be briefly described. Unless otherwise stated, contents in the alloy composition mean wt%.

### Carbon (C): 0.005 to 0.05%

Carbon (C) may improve strength and hardenability of the base steel sheet. When a content of C is less than 0.005%, manufacturing may not be easy because C is contained only as a minimal impurity. In addition, when the content of C exceeds 0.05%, formability may deteriorate. That is, the content of C may be 0.005 to 0.05%, specifically 0.005 to 0.050%, more specifically 0.015 to 0.050%, and still more specifically 0.025 to 0.050%.

### Silicon (Si): 0.03% or less (excluding 0%)

Silicon (Si), as a solid-solution strengthening element, may improve strength. In addition, when a content of Si exceeds 0.03%, the strength increases excessively, and thus it may not be effective in terms of formability. That is, the content of Si may be 0.03% or less, specifically 0.030% or less, more specifically 0.025% or less, and still more specifically 0.020% or less.

### Manganese (Mn): 0.1 to 0.5%

Through the solid-solution strengthening effect of manganese (Mn), the desired strength of the base steel sheet may be achieved, and manganese (Mn) may suppress hot-rolling brittleness by forming MnS precipitates through bonding with S. When a content of Mn is less than 0.1%, precipitation of MnS may be insufficient, and hot-rolling brittleness may be caused by remaining S. In addition, when the content of Mn exceeds 0.5%, the strength increases excessively, and thus it may be undesirable in terms of formability. That is, the content of Mn may be 0.1 to 0.5%, specifically 0.10 to 0.50%, more specifically 0.1 to 0.4%, and still more specifically 0.1 to 0.3%.

### Phosphorus (P): 0.02% or less (excluding 0%)

Phosphorus (P), which is a strengthening element, may improve the strength of the steel sheet. In addition, when a content of P exceeds 0.02%, sufficient ductility may not be achieved. That is, the content of P may be 0.02% or less, specifically 0.020% or less, more specifically 0.018% or less, and still more specifically 0.016% or less.

The base steel sheet may contain the above components and may contain iron (Fe) as the remaining component. In addition, in a typical manufacturing process, unintended impurities may inevitably be introduced from raw materials or the surrounding environment, and thus such impurities cannot be excluded. Since these impurities are readily understandable to those skilled in the typical manufacturing process, all details thereof are not specifically mentioned in the present specification.

The base steel sheet may achieve strength and mechanical properties suitable for use in a secondary battery case by containing the alloy components in appropriate amounts. For example, the base steel sheet may have a tensile strength of 400 Mpa or less and/or an elongation of 30% or more, thereby achieving excellent strength and mechanical properties.

Hereinafter, the Zn-Ni plating layer will be described.

The Zn-Ni plating layer may improve adhesion between the Ni plating layer and the base steel sheet and corrosion resistance of the plated steel sheet. Specifically, the Zn-Ni plating layer may be formed by electroplating at least one surface of the base steel sheet. In general, when Ni plating is performed on a base steel sheet, there is a problem in that the Ni plating layer is excessively hard and thus interfacial adhesion with the base steel sheet is somewhat low. However, in the plated steel sheet according to an embodiment in the present disclosure, since Zn-Ni plating is performed on the base steel sheet before Ni plating is performed, interfacial adhesion between the Ni plating layer and the base steel sheet and elongation of the plated steel sheet may be improved, and press formability may also be improved.

A content of Ni based on the total weight of the Zn-Ni plating layer may be 5 to 30 wt%. When the content of Ni is less than 5 wt%, sufficient corrosion resistance cannot be obtained. In addition, when the content of Ni exceeds 30 wt%, the hardness may be excessively high and formability may deteriorate. That is, the content of Ni may be 5 to 30 wt%, more specifically 7 to 25 wt%, and still more specifically 8 to 20 wt%.

A thickness of the Zn-Ni plating layer may be 1 to 5 µm. When the thickness of the Zn-Ni plating layer is less than 1 µm, sufficient corrosion resistance cannot be obtained. In addition, when the thickness of the Zn-Ni plating layer exceeds 5 µm, manufacturing cost may increase, and manufacturing may not be easy. That is, the thickness of the Zn-Ni plating layer may be 1 to 5 µm, more specifically 2 to 5 µm, and still more specifically 3 to 5 µm.

The Zn-Ni plating layer may contain zinc (Zn) as a remaining component. In addition, in a typical manufacturing process, unintended impurities (for example, iron (Fe)) may inevitably be mixed in from raw materials or the surrounding environment, and thus these impurities cannot be excluded. Since these impurities are readily understandable to those skilled in the typical manufacturing process, all details thereof are not specifically mentioned in the present specification.

Hereinafter, the Ni plating layer will be described.

The Ni plating layer may be formed on one surface of the Zn-Ni plating layer and may improve corrosion resistance of the plated steel sheet. For example, the Ni plating layer may be formed by electroplating one surface of the Zn-Ni plating layer.

A thickness of the Ni plating layer may be 1 to 5 µm. When the thickness of the Ni plating layer is less than 1 µm, sufficient corrosion resistance cannot be obtained. In addition, when the thickness of the Ni plating layer exceeds 5 µm, manufacturing cost may increase, and manufacturing may not be easy. That is, the thickness of the Ni plating layer may be 1 to 5 µm, more specifically 1.5 to 4.5 µm, and still more specifically 2 to 4 µm.

An average surface roughness (Ra) of the Ni plating layer may be 1.0 µm or more and less than 2.0 µm. When the average surface roughness of the Ni plating layer is less than 1.0 µm, manufacturing by temper rolling may not be easy. In addition, when the average surface roughness of the Ni plating layer is 2.0 µm or more, properties required in a secondary battery (for example, formability and corrosion resistance) cannot be sufficiently obtained. That is, the average surface roughness of the Ni plating layer may be 1.0 µm or more and less than 2.0 µm, more specifically 1.0 to 1.8 µm, and still more specifically 1.0 to 1.6 µm.

A maximum roughness height (Ry) of the Ni plating layer may be 5 to 15 µm. When the maximum roughness height of the Ni plating layer is less than 5 µm, it may not be easy to manufacture by temper rolling. In addition, when the maximum roughness height of the Ni plating layer exceeds 15 µm, properties required in a secondary battery (for example, formability and corrosion resistance) cannot be sufficiently obtained. That is, the maximum roughness height of the Ni plating layer may be 5 to 15 µm, more specifically 5 to 12 µm, and still more specifically 6 to 10 µm.

Hereinafter, the Fe-Ni-Zn diffusion layer will be described.

The Fe-Ni-Zn diffusion layer may be formed between the base steel sheet and the Zn-Ni plating layer and may improve formability. In general, the Ni plating layer has high hardness and low elongation, and thus there is a problem in that cracks occur during press forming. In the plated steel sheet according to an embodiment in the present disclosure, by forming the Fe-Ni-Zn diffusion layer through annealing treatment, formability of the plated steel sheet may be improved, and issues during cutting work (for example, generation of burrs, chips, or dust, adhesion of the Ni plating layer to a die, and damage to the die) may be minimized.

A degree of alloying of the Fe-Ni-Zn diffusion layer may be 30% or more and less than 80%. Here, the degree of alloying may be used synonymously with a degree of alloying of (Fe+Zn) in the Fe-Ni-Zn diffusion layer and a degree of alloying of (Fe+Zn)/(Fe-Ni-Zn). In addition, the degree of alloying may refer to a content ratio of (Fe+Zn) in the Fe-Ni-Zn diffusion layer. When the degree of alloying is less than 30%, formability and/or corrosion resistance may be insufficient. In addition, when the degree of alloying is 80% or more, the Fe component may be exposed on the surface, and thus corrosion resistance may be insufficient. That is, the degree of alloying may be 30% or more and less than 80%, more specifically 35 to 75%, and still more specifically 35 to 65%.

In the Fe-Ni-Zn diffusion layer, a thickness of a diffusion layer of Fe may be 30 to 80% of the total thickness of the Fe-Ni-Zn diffusion layer. Here, the diffusion layer of Fe may be formed as the Fe component of the base steel sheet diffuses into the Zn-Ni plating layer. In addition, here, the thickness of the diffusion layer of Fe may refer to a thickness of a region in which the Fe component is detected in GDS analysis in the Fe-Ni-Zn diffusion layer. When the thickness of the diffusion layer of Fe is less than 30%, formability may be insufficient. In addition, when the thickness of the diffusion layer of Fe exceeds 80%, the Fe component may be exposed on the surface, and thus corrosion resistance may be insufficient. That is, the thickness of the alloy layer of Fe may be 30 to 80%, more specifically 35 to 75%, and still more specifically 40 to 70%.

Hereinafter, a method for manufacturing a plated steel sheet according to an embodiment in the present disclosure will be described.

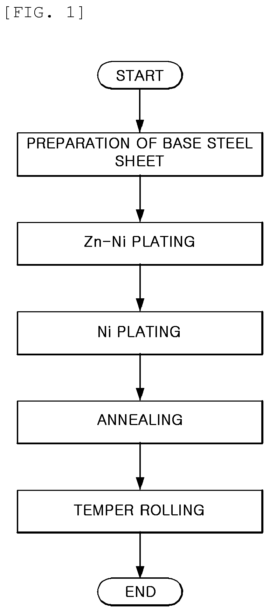

FIG. 1 is a flowchart of a method for manufacturing a plated steel sheet of the present disclosure. Referring to FIG. 1, the method for manufacturing a plated steel sheet may include preparing a base steel sheet; subjecting at least one surface of the base steel sheet to Zn-Ni plating; subjecting the Zn-Ni-plated steel sheet to Ni plating; and annealing the Ni-plated steel sheet.

The method for manufacturing a plated steel sheet will be described in more detail below.

### [Preparation of base steel sheet]

First, a base steel sheet is prepared. The base steel sheet is as described above, and the preparing of the base steel sheet may be performed by heating a slab satisfying the above-described alloy composition and then subjecting the slab to hot rolling, coiling, and cold rolling. The conditions for the heating, hot rolling, coiling, and cold rolling of the slab are not particularly limited, and conditions commonly used in the art may be applied. For example, a cold-rolled steel sheet (FH) may be annealed at a high temperature to form a cold-rolled steel sheet (CR). The unannealed cold-rolled steel sheet (FH) and the cold-rolled steel sheet (CR) after annealing may be prepared as base steel sheets.

### [Zn-Ni plating]

Subsequently, at least one surface of the base steel sheet may be subjected to Zn-Ni plating. By performing Zn-Ni plating, a Zn-Ni plating layer may be formed on at least one surface of the base steel sheet. Specifically, the Zn-Ni plating may be performed by electroplating the base steel sheet using a Zn-Ni plating solution. The conditions of the electroplating are not particularly limited, and conditions commonly used in the art may be applied.

The Zn-Ni plating may be performed by Zn-Ni electroplating at a coating weight of 3 to 20 g/m². When the coating weight of Zn-Ni is less than 3 g/m², excellent corrosion resistance cannot be achieved. In addition, when the coating weight of Zn-Ni exceeds 20 g/m², manufacturing cost may increase. That is, the coating weight of Zn-Ni may be 3 to 20 g/m², more specifically 5 to 18 g/m², and still more specifically 8 to 15 g/m².

In an example, the Zn-Ni plating solution in the Zn-Ni plating may be prepared, based on a total of 1 L, by dissolving 40 to 80 g/L of Zn metal and 40 to 80 g/L of Ni metal in sulfuric acid, adjusting the pH to 0.8 to 2.0, and dissolving 20 to 50 g/L of sodium sulfate (Na₂SO₄). By adjusting the content of Zn metal, the content of Ni metal, the pH value, and/or the content of sodium sulfate within the above ranges, the content of Ni in the Zn-Ni plating layer and the coating weight of the Zn-Ni plating layer may be adjusted.

In an example, the Zn-Ni plating may be performed at 50 to 80°C. When the temperature for performing the Zn-Ni plating is lower than 50°C, the plating rate may be slow, and productivity may decrease. In addition, when the temperature for performing the Zn-Ni plating exceeds 80°C, the plating rate may be excessively fast, and the quality of the plating layer may deteriorate. That is, the temperature for performing the Zn-Ni plating may be 50 to 80°C, more specifically 55 to 75°C, and still more specifically 60 to 70°C.

In an example, in the Zn-Ni plating, the deposition efficiency may be 85% or more. Here, the deposition efficiency may mean an actual coating weight relative to a theoretical coating weight calculable based on the amount of current applied.

### [Ni plating]

Subsequently, the Zn-Ni-plated steel sheet may be subjected to Ni plating. By performing the Ni plating, a Ni plating layer may be formed on one surface of the Zn-Ni plating layer. When the order of the Zn-Ni plating and the Ni plating is reversed (that is, when the Zn-Ni plating is performed after the Ni plating is performed), it may be difficult to achieve the intended level of corrosion resistance because the Ni plating layer is provided on one surface of the base steel sheet.

In an example, the Ni plating may be performed by electroplating the base steel sheet using a Ni plating solution. The conditions of the electroplating are not particularly limited, and conditions commonly used in the art may be applied.

The Ni plating may be performed by Ni electroplating at a coating weight of 3 to 15 g/m². When the coating weight of Ni is less than 3 g/m², the formability and corrosion resistance required in a secondary battery may not be achieved, and the thickness of the diffusion layer of Fe in the Fe-Ni-Zn diffusion layer formed later during annealing may be insufficient, such that cracks may occur in the plated steel sheet during press forming, or the thickness reduction ratio of the plated steel sheet may increase significantly. When the coating weight of Ni exceeds 15 g/m², manufacturing cost may increase excessively. That is, the coating weight of Ni may be 3 to 15 g/m², more specifically 5 to 13 g/m², and still more specifically 7 to 12 g/m².

The sum of the Zn-Ni coating weight and the Ni coating weight (hereinafter, the total coating weight) may be 5 to 40 g/m². When the total coating weight is less than 5 g/m², it may be difficult to sufficiently protect the base steel sheet, and corrosion resistance may deteriorate. When the total coating weight exceeds 40 g/m², manufacture cost may increase, or cracks may occur in the hard Ni plating layer during press forming. That is, the total coating weight may be 5 to 40 g/m², more specifically 8 to 30 g/m², and still more specifically 10 to 25 g/m².

In an example, the Ni plating solution in the Ni plating may contain, based on a total of 1 L, 200 to 500 g/L of nickel sulfate (NiSO₄), 30 to 100 g/L of nickel chloride (NiCl₂), 20 to 80 g/L of boric acid (H₃BO₃), and the balance of water. By adjusting the content of nickel sulfate, the content of nickel chloride, and/or the content of boric acid within the above ranges, the Ni plating layer may be implemented to have target physical properties (for example, corrosion resistance, formability, hardness, and the like).

In an example, the Ni plating may be performed at 40 to 80°C. When the temperature for performing the Ni plating is lower than 40°C, the plating rate may be excessively slow, and the production rate may decrease. In addition, when the temperature for performing the Ni plating exceeds 80°C, the plating rate may be excessively high, and adhesion of the plating layer to the base steel sheet may deteriorate. That is, the temperature for performing the Ni plating may be 40 to 80°C, more specifically 45 to 75°C, and still more specifically 50 to 70°C.

In an example, the Ni plating may be performed at pH 3.0 to 5.0. Additionally or alternatively, the Ni plating may be performed at a current density of 5 to 40 A/dm². By adjusting the pH and/or the current density within the above ranges, excellent plating quality and an appropriate level of coating weight may be achieved.

### [Annealing]

Subsequently, the steel sheet on which the Ni plating layer is formed may be annealed. During the annealing, an Fe-Ni-Zn diffusion layer may be formed between the base steel sheet and the Zn-Ni plating layer. The Fe-Ni-Zn diffusion layer is as described above.

In an example, when the base steel sheet in the preparation is an unannealed base steel sheet (for example, an unannealed cold-rolled steel sheet (full hard, FH)), the annealing may be performed at 520 to 670°C. When the annealing temperature is lower than 520°C, Fe diffusion is slow, and the intended degree of alloying cannot be obtained. In addition, when the annealing temperature exceeds 670°C, the thickness of the diffusion layer of Fe in the Fe-Ni-Zn diffusion layer increases excessively, such that Fe is exposed on the surface and corrosion resistance may deteriorate. That is, the annealing temperature may be 520 to 670°C, more specifically 540 to 650°C, and still more specifically 560 to 630°C.

In an example, when the base steel sheet in the preparation is an annealed base steel sheet (for example, an annealed cold-rolled steel sheet (cold rolled, CR)), the annealing may be performed at 380 to 520°C. When the annealing temperature is lower than 380°C, Fe diffusion is slow, and the intended degree of alloying cannot be obtained. In addition, when the annealing temperature exceeds 520°C, the thickness of the diffusion layer of Fe in the Fe-Ni-Zn diffusion layer increases excessively, such that Fe is exposed on the surface and corrosion resistance may deteriorate. That is, the annealing temperature may be 380 to 520°C, more specifically 400 to 500°C, and still more specifically 420 to 480°C.

The annealing may be performed for more than 20 seconds and less than 100 seconds. When the annealing time is 20 seconds or less, Fe diffusion is slow, and the intended degree of alloying cannot be obtained. In addition, when the annealing time is 100 seconds or more, the thickness of the diffusion layer of Fe in the Fe-Ni-Zn diffusion layer may increase excessively, such that Fe is exposed on the surface and corrosion resistance may deteriorate. That is, the annealing time may be more than 20 seconds and less than 100 seconds, more specifically 30 to 90 seconds, and still more specifically 40 to 80 seconds.

A thickness of the Fe-Ni-Zn diffusion layer formed during the annealing may be 15 to 70% of the sum of the thickness of the Zn-Ni plating layer and the thickness of the Ni plating layer before annealing (hereinafter, the total plating layer thickness before annealing). When the thickness of the Fe-Ni-Zn diffusion layer is less than 15% of the total plating layer thickness before annealing, formability may be insufficient. In addition, when the thickness of the Fe-Ni-Zn diffusion layer exceeds 70% of the total plating layer thickness before annealing, corrosion resistance may be insufficient. That is, the thickness of the Fe-Ni-Zn diffusion layer may be 15 to 70% of the total plating layer thickness before annealing, more specifically 20 to 65%, and still more specifically 30 to 60%.

### [Temper rolling]

In an example, the method may further include temper rolling the annealed steel sheet. Through the temper rolling, the thickness, shape, and surface roughness of the steel sheet may be adjusted, residual stress of the steel sheet may be minimized, and uniform material properties may be achieved.

The temper rolling may be performed at an elongation of 0.7 to 1.5%. When the elongation is less than 0.7%, the shape of the steel sheet may be poor. In addition, when the elongation exceeds 1.5%, the average surface roughness of the Ni plating layer may be somewhat low, and corrosion resistance or formability may deteriorate. That is, the elongation may be 0.7 to 1.5%, more specifically 0.8 to 1.3%, and still more specifically 0.8 to 1.2%.

### Mode for Invention

Hereinafter, the present disclosure will be described in more detail with reference to Examples. However, it should be noted that the following Examples are intended only to illustrate the present disclosure in more detail and are not intended to limit the scope of the present disclosure. This is because the scope of the present disclosure is determined by the matters recited in the claims and matters reasonably inferred therefrom.

### (Examples)

An annealed steel sheet (CR) obtained by annealing a cold-rolled steel sheet having a thickness of 0.30 mm and containing 0.03 wt% of C, 0.01 wt% of Si, 0.15 wt% of Mn, 0.008 wt% of P, and the balance of iron (Fe) and other inevitable impurities, or an unannealed steel sheet (FH) not subjected to annealing was prepared as a base steel sheet.

The base steel sheet was subjected to alkaline degreasing, pickling using an aqueous sulfuric acid solution, and water washing, and then Zn-Ni electroplating was performed on the base steel sheet using a Zn-Ni plating solution. Specifically, the Zn-Ni plating solution was prepared by dissolving 60 g/L of Zn metal and 60 g/L of Ni metal in sulfuric acid based on 1 L, adjusting the pH to 1.5, and then dissolving 40 g/L of sodium sulfate (Na₂SO₄). Zn-Ni plating was performed at 60°C, and the coating weight of Zn-Ni and the content of Ni based on the total weight of the Zn-Ni plating layer were adjusted under the conditions shown in Table 1.

Thereafter, Ni electroplating was performed, using a Ni plating solution, on the steel sheet on which the Zn-Ni plating layer was formed. Here, the Ni plating solution contained, based on 1 L, 400 g/L of nickel sulfate (NiSO₄), 80 g/L of nickel chloride (NiCl₂), 60 g/L of boric acid (H₃BO₃), and the balance of water. The Ni plating was performed under conditions of pH 4.0, a temperature of 60°C, and a current density of 20 A/dm², and the coating weight of Ni was adjusted under the conditions shown in Table 1.

Finally, the steel sheet on which the Ni plating layer was formed was annealed under the conditions shown in Table 1 to form an Fe-Ni-Zn diffusion layer between the base steel sheet and the Zn-Ni plating layer, and then temper-rolled, thereby manufacturing a plated steel sheet.

**[Table 1]**

| Classification | Type of base steel sheet | Zn-Ni plating | | Ni coating weight (g/m²) | Total coating weight (g/m²) | Annealing temperature (°C) | Annealing time (sec) | Elongation during temper rolling (%) |
|---|---|---|---|---|---|---|---|---|
| | | Zn-Ni coating weight (g/m²) | Content of Ni (wt%) | | | | | |
| Example 1 | FH | 5 | 5 | 5 | 10 | 550 | 40 | 0.8 |
| Example 2 | FH | 5 | 5 | 5 | 10 | 550 | 80 | 1.3 |
| Example 3 | FH | 5 | 5 | 5 | 10 | 650 | 40 | 0.8 |
| Example 4 | FH | 5 | 5 | 5 | 10 | 650 | 80 | 1.3 |
| Example 5 | FH | 5 | 5 | 10 | 15 | 550 | 40 | 0.8 |
| Example 6 | FH | 5 | 5 | 10 | 15 | 550 | 80 | 1.3 |
| Example 7 | FH | 5 | 5 | 10 | 15 | 650 | 40 | 0.8 |
| Example 8 | FH | 5 | 5 | 10 | 15 | 650 | 80 | 1.3 |
| Example 9 | FH | 5 | 20 | 5 | 10 | 550 | 40 | 0.8 |
| Example 10 | FH | 5 | 20 | 5 | 10 | 550 | 80 | 1.3 |
| Example 11 | FH | 5 | 20 | 5 | 10 | 650 | 40 | 0.8 |
| Example 12 | FH | 5 | 20 | 5 | 10 | 650 | 80 | 1.3 |
| Example 13 | FH | 5 | 20 | 10 | 15 | 550 | 40 | 0.8 |
| Example 14 | FH | 5 | 20 | 10 | 15 | 550 | 80 | 1.3 |
| Example 15 | FH | 5 | 20 | 10 | 15 | 650 | 40 | 0.8 |
| Example 16 | FH | 5 | 20 | 10 | 15 | 650 | 80 | 1.3 |
| Example 17 | FH | 15 | 5 | 5 | 20 | 550 | 40 | 0.8 |
| Example 18 | FH | 15 | 5 | 5 | 20 | 550 | 80 | 1.3 |
| Example 19 | FH | 15 | 5 | 5 | 20 | 650 | 40 | 0.8 |
| Example 20 | FH | 15 | 5 | 5 | 20 | 650 | 80 | 1.3 |
| Example 21 | FH | 15 | 5 | 10 | 25 | 550 | 40 | 0.8 |
| Example 22 | FH | 15 | 5 | 10 | 25 | 550 | 80 | 1.3 |
| Example 23 | FH | 15 | 5 | 10 | 25 | 650 | 40 | 0.8 |
| Example 24 | FH | 15 | 5 | 10 | 25 | 650 | 80 | 1.3 |
| Example 25 | FH | 15 | 20 | 5 | 20 | 550 | 40 | 0.8 |
| Example 26 | FH | 15 | 20 | 5 | 20 | 550 | 80 | 1.3 |
| Example 27 | FH | 15 | 20 | 5 | 20 | 650 | 40 | 0.8 |
| Example 28 | FH | 15 | 20 | 5 | 20 | 650 | 80 | 1.3 |
| Example 29 | FH | 15 | 20 | 10 | 25 | 550 | 40 | 0.8 |
| Example 30 | FH | 15 | 20 | 10 | 25 | 550 | 80 | 1.3 |
| Example 31 | FH | 15 | 20 | 10 | 25 | 650 | 40 | 0.8 |
| Example 32 | FH | 15 | 20 | 10 | 25 | 650 | 80 | 1.3 |
| Example 33 | CR | 5 | 5 | 5 | 10 | 400 | 40 | 0.9 |
| Example 34 | CR | 5 | 5 | 5 | 10 | 400 | 80 | 1.4 |
| Example 35 | CR | 5 | 5 | 5 | 10 | 500 | 40 | 0.8 |
| Example 36 | CR | 5 | 5 | 5 | 10 | 500 | 80 | 1.3 |
| Example 37 | CR | 5 | 5 | 10 | 15 | 400 | 40 | 0.8 |
| Example 38 | CR | 5 | 5 | 10 | 15 | 400 | 80 | 1.3 |
| Example 39 | CR | 5 | 5 | 10 | 15 | 500 | 40 | 0.8 |
| Example 40 | CR | 5 | 5 | 10 | 15 | 500 | 80 | 1.3 |
| Example 41 | CR | 5 | 20 | 5 | 10 | 400 | 40 | 0.8 |
| Example 42 | CR | 5 | 20 | 5 | 10 | 400 | 80 | 1.3 |
| Example 43 | CR | 5 | 20 | 5 | 10 | 500 | 40 | 0.8 |
| Example 44 | CR | 5 | 20 | 5 | 10 | 500 | 80 | 1.3 |
| Example 45 | CR | 5 | 20 | 10 | 15 | 400 | 40 | 0.8 |
| Example 46 | CR | 5 | 20 | 10 | 15 | 400 | 80 | 1.3 |
| Example 47 | CR | 5 | 20 | 10 | 15 | 500 | 40 | 0.8 |
| Example 48 | CR | 5 | 20 | 10 | 15 | 500 | 80 | 1.3 |
| Example 49 | CR | 15 | 5 | 5 | 20 | 400 | 40 | 0.8 |
| Example 50 | CR | 15 | 5 | 5 | 20 | 400 | 80 | 1.3 |
| Example 51 | CR | 15 | 5 | 5 | 20 | 500 | 40 | 0.8 |
| Example 52 | CR | 15 | 5 | 5 | 20 | 500 | 80 | 1.3 |
| Example 53 | CR | 15 | 5 | 10 | 25 | 400 | 40 | 0.8 |
| Example 54 | CR | 15 | 5 | 10 | 25 | 400 | 80 | 1.3 |
| Example 55 | CR | 15 | 5 | 10 | 25 | 500 | 40 | 0.8 |
| Example 56 | CR | 15 | 5 | 10 | 25 | 500 | 80 | 1.3 |
| Example 57 | CR | 15 | 20 | 5 | 20 | 400 | 40 | 0.8 |
| Example 58 | CR | 15 | 20 | 5 | 20 | 400 | 80 | 1.3 |
| Example 59 | CR | 15 | 20 | 5 | 20 | 500 | 40 | 0.8 |
| Example 60 | CR | 15 | 20 | 5 | 20 | 500 | 80 | 1.3 |
| Example 61 | CR | 15 | 20 | 10 | 25 | 400 | 40 | 0.8 |
| Example 62 | CR | 15 | 20 | 10 | 25 | 400 | 80 | 1.3 |
| Example 63 | CR | 15 | 20 | 10 | 25 | 500 | 40 | 0.8 |
| Example 64 | CR | 15 | 20 | 10 | 25 | 500 | 80 | 1.3 |
| Comparative Example 1 | FH | 5 | 5 | 5 | 10 | 550 | 20 | 0.8 |
| Comparative Example 2 | FH | 5 | 5 | 5 | 10 | 550 | 100 | 1.3 |
| Comparative Example 3 | FH | 5 | 5 | 5 | 10 | 700 | 40 | 0.8 |
| Comparative Example 4 | FH | 5 | 5 | 5 | 10 | 700 | 80 | 1.3 |
| Comparative Example 5 | FH | 20 | 20 | 20 | 40 | 700 | 40 | 0.8 |
| Comparative Example 6 | FH | 20 | 20 | 20 | 40 | 700 | 80 | 1.3 |
| Comparative Example 7 | CR | 5 | 5 | 5 | 10 | 400 | 20 | 0.8 |
| Comparative Example 8 | CR | 5 | 5 | 5 | 10 | 400 | 100 | 1.3 |
| Comparative Example 9 | CR | 5 | 5 | 5 | 10 | 550 | 40 | 0.8 |
| Comparative Example 10 | CR | 5 | 5 | 5 | 10 | 550 | 80 | 1.3 |
| Comparative Example 11 | CR | 20 | 20 | 20 | 40 | 550 | 40 | 0.8 |
| Comparative Example 12 | CR | 20 | 20 | 20 | 40 | 550 | 80 | 1.3 |
| Comparative Example 13 | FH | 0 | - | 20 | 20 | 650 | 80 | 1.3 |
| Comparative Example 14 | FH | 10 | 15 | 10 | 20 | 450 | 60 | 1.3 |
| Comparative Example 15 | FH | 10 | 15 | 10 | 20 | 450 | 60 | 0.5 |
| Comparative Example 16 | FH | 10 | 15 | 10 | 20 | 700 | 60 | 1.7 |
| Comparative Example 17 | CR | 0 | - | 20 | 20 | 500 | 80 | 1.3 |
| Comparative Example 18 | CR | 10 | 15 | 10 | 20 | 350 | 60 | 1.3 |
| Comparative Example 19 | CR | 10 | 15 | 10 | 20 | 350 | 60 | 0.5 |
| Comparative Example 20 | CR | 10 | 15 | 10 | 20 | 550 | 60 | 1.7 |
| Comparative Example 21 | FH | 0 | - | 20 | 20 | 550 | 80 | 1.3 |
| Comparative Example 22 | CR | 0 | - | 20 | 20 | 450 | 60 | 1.3 |

With respect to the manufactured plated steel sheets of Examples and Comparative Examples, the degree of alloying of the Fe-Ni-Zn diffusion layer, the average surface roughness (Ra) of the Ni plating layer, corrosion resistance, and formability were evaluated. The results are shown in Table 2.

The degree of alloying was calculated according to the equation of [(Fe+Zn)/(Fe+Ni+Zn)×100] (each element means a content (wt%) in the Fe-Ni-Zn diffusion layer). Here, the content of each element was measured using GDS analysis.

The average surface roughness (Ra) was measured using a MITUTOYO SV502 2D surface roughness tester.

The corrosion resistance was evaluated through a salt spray test for 4 hours based on JIS Z-2371. Specifically, after each steel sheet was formed into a cylindrical case for a 2170-class battery (diameter: 21 mm, height: 70 mm), a salt spray test was performed, and corrosion resistance was evaluated based on the presence or absence of white rust and red rust on the surface (⊚: excellent, ○: good, △: fair, ×: poor).

Formability was evaluated through a bending test on each steel sheet. Specifically, after a specimen having a thickness of 25 mm was inserted, the specimen was bent to 180° (1T bending), and then formability was evaluated based on the presence or absence of cracks in a cross-section of the plating layer through FE-SEM (JEOL JSM-7000F) image analysis. When no cracks occurred over the entire formed surface and a thickness reduction ratio of the plating layer was less than 20%, formability was evaluated as ⊚ (excellent); when no cracks occurred over the entire formed surface but the thickness reduction ratio of the plating layer was 20% or more and less than 60%, formability was evaluated as ○ (good); when no cracks occurred over the entire formed surface but the thickness reduction ratio of the plating layer was 60% or more, formability was evaluated as Δ (fair); and when cracks occurred over the entire formed surface, formability was evaluated as × (poor).

**[Table 2]**

| Classification | Degree of alloying (%) | Average surface roughness (µm) | Corrosion resistance | Formability |
|---|---|---|---|---|
| Example 1 | 50 | 1.7 | ⊚ | ⊚ |
| Example 2 | 60 | 1.1 | ⊚ | ⊚ |
| Example 3 | 60 | 1.7 | ⊚ | ⊚ |
| Example 4 | 70 | 1.1 | ⊚ | ⊚ |
| Example 5 | 40 | 1.7 | ⊚ | ⊚ |
| Example 6 | 50 | 1.1 | ⊚ | ⊚ |
| Example 7 | 50 | 1.7 | ⊚ | ⊚ |
| Example 8 | 60 | 1.1 | ⊚ | ⊚ |
| Example 9 | 50 | 1.7 | ⊚ | ⊚ |
| Example 10 | 60 | 1.1 | ⊚ | ⊚ |
| Example 11 | 60 | 1.7 | ⊚ | ⊚ |
| Example 12 | 70 | 1.1 | ⊚ | ⊚ |
| Example 13 | 40 | 1.7 | ⊚ | ⊚ |
| Example 14 | 50 | 1.1 | ⊚ | ⊚ |
| Example 15 | 50 | 1.7 | ⊚ | ⊚ |
| Example 16 | 60 | 1.1 | ⊚ | ⊚ |
| Example 17 | 40 | 1.7 | ⊚ | ⊚ |
| Example 18 | 50 | 1.1 | ⊚ | ⊚ |
| Example 19 | 50 | 1.7 | ⊚ | ⊚ |
| Example 20 | 60 | 1.1 | ⊚ | ⊚ |
| Example 21 | 35 | 1.7 | ⊚ | ⊚ |
| Example 22 | 40 | 1.1 | ⊚ | ⊚ |
| Example 23 | 40 | 1.7 | ⊚ | ⊚ |
| Example 24 | 50 | 1.1 | ⊚ | ⊚ |
| Example 25 | 40 | 1.7 | ⊚ | ⊚ |
| Example 26 | 50 | 1.1 | ⊚ | ⊚ |
| Example 27 | 50 | 1.7 | ⊚ | ⊚ |
| Example 28 | 60 | 1.1 | ⊚ | ⊚ |
| Example 29 | 35 | 1.7 | ⊚ | ⊚ |
| Example 30 | 40 | 1.1 | ⊚ | ⊚ |
| Example 31 | 40 | 1.7 | ⊚ | ⊚ |
| Example 32 | 50 | 1.1 | ⊚ | ⊚ |
| Example 33 | 50 | 1.8 | ⊚ | ⊚ |
| Example 34 | 60 | 1.2 | ⊚ | ⊚ |
| Example 35 | 60 | 1.8 | ⊚ | ⊚ |
| Example 36 | 70 | 1.2 | ⊚ | ⊚ |
| Example 37 | 40 | 1.8 | ⊚ | ⊚ |
| Example 38 | 50 | 1.2 | ⊚ | ⊚ |
| Example 39 | 50 | 1.8 | ⊚ | ⊚ |
| Example 40 | 60 | 1.2 | ⊚ | ⊚ |
| Example 41 | 50 | 1.8 | ⊚ | ⊚ |
| Example 42 | 60 | 1.2 | ⊚ | ⊚ |
| Example 43 | 60 | 1.8 | ⊚ | ⊚ |
| Example 44 | 70 | 1.2 | ⊚ | ⊚ |
| Example 45 | 40 | 1.8 | ⊚ | ⊚ |
| Example 46 | 50 | 1.2 | ⊚ | ⊚ |
| Example 47 | 50 | 1.8 | ⊚ | ⊚ |
| Example 48 | 60 | 1.2 | ⊚ | ⊚ |
| Example 49 | 40 | 1.8 | ⊚ | ⊚ |
| Example 50 | 50 | 1.2 | ⊚ | ⊚ |
| Example 51 | 50 | 1.8 | ⊚ | ⊚ |
| Example 52 | 60 | 1.2 | ⊚ | ⊚ |
| Example 53 | 30 | 1.8 | ⊚ | ⊚ |
| Example 54 | 40 | 1.2 | ⊚ | ⊚ |
| Example 55 | 40 | 1.8 | ⊚ | ⊚ |
| Example 56 | 50 | 1.2 | ⊚ | ⊚ |
| Example 57 | 40 | 1.8 | ⊚ | ⊚ |
| Example 58 | 50 | 1.2 | ⊚ | ⊚ |
| Example 59 | 50 | 1.8 | ⊚ | ⊚ |
| Example 60 | 60 | 1.2 | ⊚ | ⊚ |
| Example 61 | 30 | 1.8 | ⊚ | ⊚ |
| Example 62 | 40 | 1.2 | ⊚ | ⊚ |
| Example 63 | 40 | 1.8 | ⊚ | ⊚ |
| Example 64 | 50 | 1.2 | ⊚ | ⊚ |
| Comparative Example 1 | 20 | 1.7 | Δ | Δ |
| Comparative Example 2 | 80 | 1.1 | Δ | Δ |
| Comparative Example 3 | 80 | 1.7 | Δ | Δ |
| Comparative Example 4 | 90 | 1.1 | Δ | Δ |
| Comparative Example 5 | 80 | 1.7 | ⊚ | Δ |
| Comparative Example 6 | 90 | 1.1 | ⊚ | Δ |
| Comparative Example 7 | 20 | 1.8 | Δ | Δ |
| Comparative Example 8 | 80 | 1.2 | Δ | Δ |
| Comparative Example 9 | 80 | 1.8 | Δ | Δ |
| Comparative Example 10 | 90 | 1.2 | Δ | Δ |
| Comparative Example 11 | 80 | 1.8 | ⊚ | Δ |
| Comparative Example 12 | 90 | 1.2 | ⊚ | Δ |
| Comparative Example 13 | 55 | 1.2 | Δ | Δ |
| Comparative Example 14 | 25 | 1.2 | Δ | Δ |
| Comparative Example 15 | 25 | 2.0 | Δ | Δ |
| Comparative Example 16 | 70 | 0.8 | Δ | Δ |
| Comparative Example 17 | 55 | 1.2 | Δ | Δ |
| Comparative Example 18 | 25 | 1.2 | Δ | Δ |
| Comparative Example 19 | 25 | 2.0 | Δ | Δ |
| Comparative Example 20 | 70 | 0.8 | Δ | Δ |
| Comparative Example 21 | 90 | 0.8 | Δ | Δ |
| Comparative Example 22 | 80 | 1.2 | Δ | Δ |

As can be seen from Tables 1 and 2, it was found that, in Examples 1 to 64, which satisfied the manufacturing conditions proposed by the present disclosure, the degree of alloying and the average surface roughness of the Ni plating layer were at appropriate levels, and corrosion resistance and formability were also excellent.

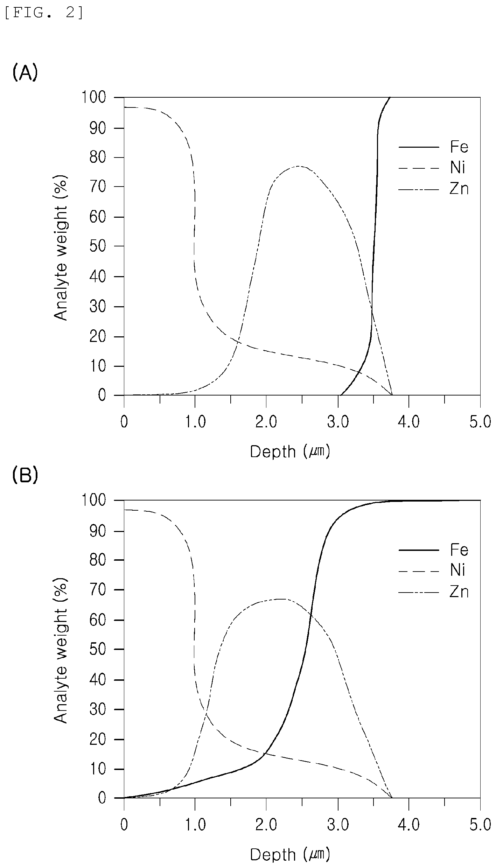

In addition, as a representative example, a GDS analysis graph of Example 23 is shown in FIG. 2. Specifically, FIG. 2(A) is a graph obtained by performing GDS analysis on the contents of Fe, Ni, and Zn in the total plating layer (the Zn-Ni plating layer and the Ni plating layer) and the diffusion layer of Example 23 before annealing. In addition, FIG. 2(B) is a graph obtained by performing GDS analysis on the contents of Fe, Ni, and Zn in the total plating layer and the diffusion layer of Example 23 after annealing.

Referring to FIG. 2, it was confirmed that, in Example 23, the degree of alloying of the diffusion layer after annealing was realized at an appropriate level.

On the other hand, in Comparative Examples 1 and 7, because the annealing time was set to be excessively short, the degree of alloying of the diffusion layer was insufficient, cracks occurred in the plating layer, and both corrosion resistance and formability deteriorated. In addition, in Comparative Examples 2 and 8, because the annealing time was set to be excessively long, the degree of alloying of the diffusion layer was excessive, and both corrosion resistance and formability deteriorated.

In Comparative Examples 3, 4, 9, and 10, because the annealing temperature was set to be excessively high, the degree of alloying of the diffusion layer increased excessively, and both corrosion resistance and formability deteriorated. In addition, in Comparative Examples 5, 6, 11, and 12, because the annealing temperature was set to be excessively high, formability was insufficient.

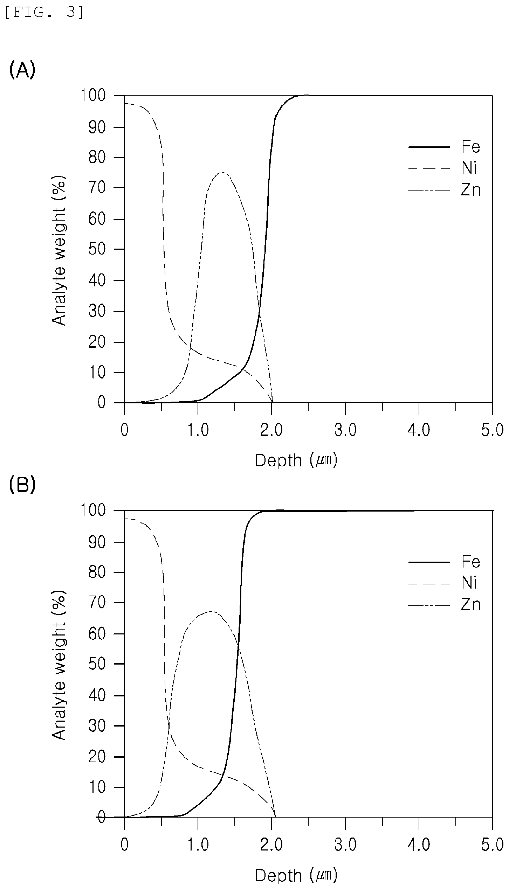

In addition, as a representative comparative example, a GDS analysis graph of Comparative Example 4 is shown in FIG. 3. Specifically, FIG. 3(A) is a graph obtained by performing GDS analysis on the contents of Fe, Ni, and Zn in the total plating layer (the Zn-Ni plating layer and the Ni plating layer) and the diffusion layer of Comparative Example 4 before annealing. In addition, FIG. 3(B) is a graph obtained by performing GDS analysis on the contents of Fe, Ni, and Zn in the total plating layer and the diffusion layer of Comparative Example 4 after annealing.

Referring to FIG. 3, it was confirmed that, in Comparative Example 4, the degree of alloying of the diffusion layer after annealing was realized at an excessively high level.

In Comparative Examples 13, 17, 21, and 22, because the Zn-Ni plating layer was not formed, the degree of alloying after annealing became excessively high, or interfacial adhesion between the Ni plating layer and the base steel sheet deteriorated, and thus press formability and corrosion resistance also deteriorated.

In Comparative Examples 14, 18, and 19, because the annealing temperature was set too low, the degree of alloying of the diffusion layer was insufficient and a sufficient alloy layer was not formed, and thus both corrosion resistance and formability deteriorated.

In Comparative Examples 15 and 19, because the elongation during temper rolling was set too low, the average surface roughness was excessively high, and quality such as corrosion resistance and formability deteriorated. In addition, in Comparative Examples 16 and 20, because the elongation during temper rolling was set too high, the average surface roughness was excessively low, and quality such as corrosion resistance and formability deteriorated.

The above embodiments are merely examples, and the present disclosure is not limited thereto. Any configuration having substantially the same configuration as the technical idea described in the claims of the present disclosure and achieving the same operational effects is included in the technical scope of the present disclosure.

## Claims

1. A plated steel sheet comprising:
a base steel sheet;
a Zn-Ni plating layer provided on at least one surface of the base steel sheet;
a Ni plating layer provided on one surface of the Zn-Ni plating layer; and
an Fe-Ni-Zn diffusion layer provided between the base steel sheet and the Zn-Ni plating layer,
wherein a degree of alloying of the diffusion layer is 30% or more and less than 80%.

2. The plated steel sheet of claim 1, wherein a content of Ni based on the total weight of the Zn-Ni plating layer is 5 to 30 wt%.

3. The plated steel sheet of claim 1, wherein a thickness of the Zn-Ni plating layer is 1 to 5 µm.

4. The plated steel sheet of claim 1, wherein a thickness of the Ni plating layer is 1 to 5 µm.

5. The plated steel sheet of claim 1, wherein an average surface roughness (Ra) of the Ni plating layer is 1.0 µm or more and less than 2.0 µm.

6. A method for manufacturing a plated steel sheet, the method comprising:
preparing a base steel sheet;
subjecting at least one surface of the base steel sheet to Zn-Ni plating;
subjecting the Zn-Ni-plated steel sheet to Ni plating; and
annealing the Ni-plated steel sheet,
wherein, in the annealing, an Fe-Ni-Zn diffusion layer having a degree of alloying of 30% or more and less than 80% is formed.

7. The method of claim 6, wherein, when the base steel sheet in the preparation is an unannealed base steel sheet, the annealing is performed at 520 to 670°C.

8. The method of claim 6, wherein, when the base steel sheet in the preparation is an annealed base steel sheet, the annealing is performed at 380 to 520°C.

9. The method of claim 6, wherein the Zn-Ni plating is performed by Zn-Ni electroplating at a coating weight of 3 to 20 g/m².

10. The method of claim 6, wherein the Ni plating is performed by Ni electroplating at a coating weight of 3 to 15 g/m².

11. The method of claim 6, wherein the annealing is performed for more than 20 seconds and less than 100 seconds.

12. The method of claim 6, further comprising temper rolling the annealed steel sheet.

13. The method of claim 12, wherein the temper rolling is performed at an elongation of 0.7 to 1.5%.
